# EUROPÄISCHE PATENTSCHRIFT

(11) **EP 2 266 176 B1**
(45) Veröffentlichungstag und Bekanntmachung des Hinweises auf die Patenterteilung: **20.07.2016**
(21) Anmeldenummer: 09714272.3
(22) Anmeldetag: 11.02.2009
(51) Int. Cl.: H02H 1/06, H02H 9/04

(54) **ÜBERWACHUNGSEINRICHTUNG**
MONITORING DEVICE
DISPOSITIF DE SURVEILLANCE

(30) Priorität: 27.02.2008 DE 202008002736 U
(43) Veröffentlichungstag der Anmeldung: 29.12.2010
(73) Patentinhaber: Weidmüller Interface GmbH & Co. KG, 32758 Detmold (DE)
(72) Erfinder: KASPER, Norbert, 32756 Detmold (DE)
(74) Vertreter: Specht, Peter
(86) Internationale Anmeldenummer: PCT/EP2009/051547
(87) Internationale Veröffentlichungsnummer: WO 2009/106425

(56) Entgegenhaltungen:
- EP-A- 0 899 845
- EP-A- 1 589 629
- EP-A- 1 750 343

## Beschreibung

Die Erfindung betrifft eine Überwachungseinrichtung zur Überwachung von Schutzvorrichtungen gemäß der im Oberbegriff des Anspruchs 1 angegebenen Gattung.

Die in Rede stehende Überwachungseinrichtung überwacht Schutzvorrichtungen, die elektrische Systeme gegen Störereignisse schützen. Im Kontext der vorliegenden Offenbarung wird unter einem Störereignis ein Ereignis verstanden, durch dessen Auftreten ein elektrisches System mit elektrischer Energie beaufschlagt wird, und zwar derart, dass das elektrische System in seiner ordnungsgemäßen Funktion beeinträchtigt oder zerstört wird. Beispiele für Störereignisse sind Blitzeinschläge oder statische Entladungen in deren Folge Überspannungsimpulse und / oder Überstromimpulse, beispielweise galvanisch, induktiv oder kapazitiv, in das elektrische System eingekoppelt werden und dieses in seiner Funktion beeinträchtigen oder zerstören.

Vorstehend bezeichnete Schutzvorrichtungen für elektrische Systeme sind dem Fachmann im Aufbau und Funktion bekannt und bedürfen daher keiner weiteren Erläuterung im Rahmen der vorliegenden Erfindung.

Ebenfalls sind Überwachungseinrichtungen zur Überwachung von Schutzvorrichtungen für elektrische Systeme in vielerlei Ausführungsformen bekannt.

Eine Solde Überwachungseinrichtung ist aus EP 0 899 845 bekannt.

Nachteilig an den bekannten Überwachungseinrichtungen ist jedoch der verhältnismäßig hohe Aufwand bei Installation, Betrieb und Wartung dieser Einrichtungen. Demgemäss ist es die Aufgabe der Erfindung, eine Überwachungseinrichtung zu schaffen, die die geschilderten Probleme behebt.

Die Erfindung löst die Aufgabe mit einer Überwachungseinrichtung mit den Merkmalen des Anspruches 1.

Erfindungsgemäß wird die elektrische Energie, die zur Versorgung der Überwachungseinrichtung erforderlich ist, aus der elektrischen Energie entnommen, die in Folge eines Störereignisses in die Schutzvorrichtung eingekoppelt wird.

In vorteilhafter Weise wird hierdurch der Aufwand für die Installation, den Betrieb und die Wartung von in Rede stehenden Überwachungseinrichtungen verringert. So entfallen beispielsweise eine separate Spannungsversorgung, zusätzliche elektrische Leitungen, Klemmen usw. zum Anschluss der Überwachungseinrichtung an die separate Spannungsversorgung. Weiterhin verringert sich der Platzbedarf bei der Installation, so dass im Vergleich zu herkömmlichen Überwachungseinrichtungen insgesamt kleinere Einheiten gebaut werden können. Im Betrieb verringert sich der Energiebedarf auf Grund der nicht mehr erforderlichen separaten Spannungsversorgung. Zusätzlich vereinfacht sich die Wartung, da beispielsweise im Wartungsfall weniger Komponenten zu überprüfen sind.

Weitere Ausgestaltungen der Erfindung ergeben sich aus der gegenständlichen Beschreibung, der Zeichnung und den Merkmalen der Unteransprüche.

Die Erfindung wird nachfolgend in Verbindung mit der beiliegenden Zeichnung und der gegenständlichen Beschreibung näher erläutert.

### Es zeigt:

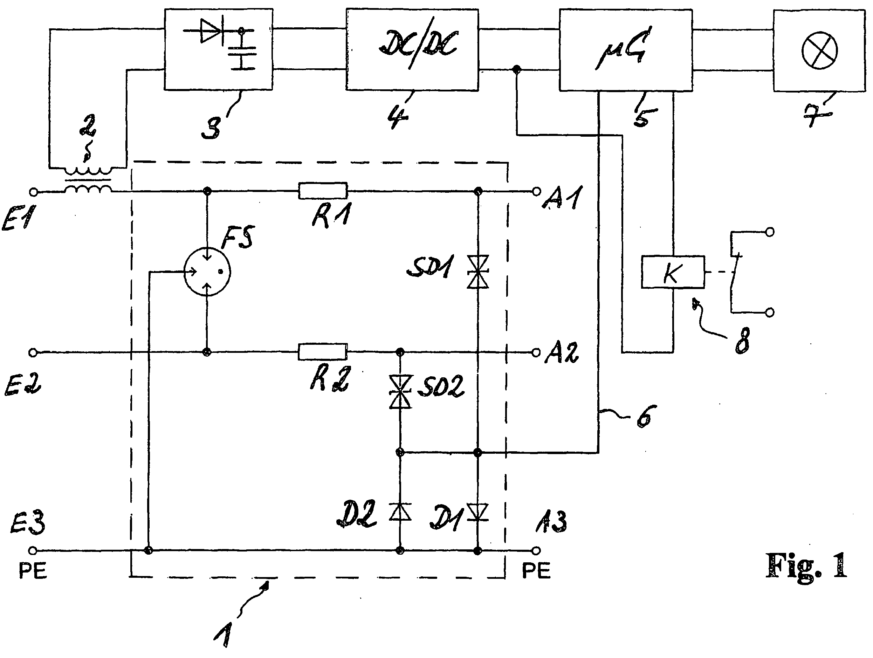

Fig. 1: eine schematische Darstellung einer Ausführungsform der Erfindung (Blockschaltbild) und beispielhaft eine Schutzvorrichtung für elektrische Systeme.

Eine Strichlinie umgrenzt eine beispielhafte Schutzvorrichtung 1 zum Schutz elektrischer Systeme gegen Störereignisse. Im Eingangsbereich der Schutzvorrichtung 1 liegt jeweils eine Funkenstrecke zwischen zwei Zweigen E1-A1 und E3-A3 sowie zwischen zwei Zweigen E2-A2 und E3-A3, beide Funkenstrecken sind in der vorliegenden Ausführungsform in einem mit FS bezeichneten Bauteil untergebracht. Dieser Teil der Schutzvorrichtung wird als Grobschutz bezeichnet und "vernichtet" den größten Teil der durch ein Störereignis in die Schutzvorrichtung eingekoppelten Energie.

Der restliche Teil der Schutzvorrichtung wird als Feinschutz bezeichnet und dient vorrangig dazu, die auftretenden Spannungen auf ein für das zu schützende elektrische System ungefährliches Maß zu begrenzen. Eine Eingangsklemme E1 ist über eine Primärseite (nicht explizit bezeichnet) einer Koppeleinrichtung 2, beispielsweise einer Übertrageranordnung, und einem Widerstand R1 mit einer Ausgangsklemme A1 verbunden. Parallel zur Ausgangsklemme A1 und zu einer auf PE-Potential liegenden Ausgangsklemme A3 liegt eine Reihenschaltung aus einer Suppressordiode SD1 und antiparallel geschalteten Dioden D1 und D2. Entsprechend ist eine Eingangsklemme E2 über einen Widerstand R2 mit einer Ausgangsklemme A2 verbunden, parallel zur Ausgangsklemme A2 und zur auf PE-Potential liegenden Ausgangsklemme A3 liegt eine Reihenschaltung aus einer Suppressordiode SD2 und den antiparallel geschalteten Dioden D1 und D2. Es ist auch denkbar eine Koppeleinrichtung in den Zweig E2-A2 einzuschleifen oder mehrere Koppeleinrichtungen in mehrere Zweige einzuschleifen und diese gemeinsam zur Auskopplung von elektrischer Energie zu verwenden. Auch ist die Anzahl vorstehend beschriebener Zweige nicht auf zwei begrenzt. Dieser Aufbau ist lediglich beispielhaft zu verstehen und kann, je nach Anwendungsfall, unterschiedlich ausfallen ohne den Bereich der vorliegenden Erfindung zu verlassen.

Ein nicht dargestelltes, gegen Störereignisse zu schützendes elektrisches System, beispielsweise ein Messverstärker oder ein Industrie-PC, ist über die Ausgangsklemmen A1 bis A3 an die Schutzvorrichtung angeschlossen. Die Eingangsklemmen E1 - E3 sind je nach Anwendung ihrerseits mit Signalquellen und / oder mit elektrische Energie liefernden Einrichtungen, beispielsweise das elektrische Versorgungsnetz, verbunden.

In jedem Fall erfolgt die Installation und die Verschaltung von Schutzvorrichtung 1 und zu schützendem elektrischen System derart, dass im Falle eines Störereignisses eingekoppelte elektrische Energie auf der Eingangsseite der Schutzvorrichtung 1 eingekoppelt wird. Dies ist dem Fachmann bekannt.

Im Folgenden wird der Aufbau und die Funktion der erfindungsgemäßen Überwachungseinrichtung beschrieben.

Mittels der Koppeleinrichtung 2 wird ein Teil der elektrischen Energie, die in Folge eines Störereignisses in die Schutzvorrichtung 1 eingekoppelt wird ausgekoppelt. Über eine nachgeschaltete Gleichricht- und Speichereinrichtung 3, beispielsweise einem Brückengleichrichter mit nachgeschaltetem Speicherkondensator, wird die so gewonnene Spannung gleichgerichtet und gespeichert. Mittels einer nachgeschalteten Spannungsanpassungseinrichtung 4, beispielsweise ein Stepdownspannungsregler wird die Ausgangsspannung der Gleichricht- und Speichereinrichtung 3 auf ein Spannungsniveau, beispielsweise 3,3 Volt, gebracht, welches zur Versorgung der nachgeschalteten Steuer- und Messeinrichtung 5, beispielsweise ein Mikrokontroller des Typs PIC 12F508 mit einer erforderlichen Peripherie, geeignet ist.

Die derart mit elektrischer Betriebsenergie versorgte Steuer- und Messeinrichtung 5 weist nicht explizit dargestellte Mess- und Überwachungsmittel zur Messung von elektrischen Größen auf, mittels derer auf einen oder mehrere Zustände der Schutzvorrichtung, bzw. auf einen oder mehrere Zustände von einem oder mehrere Bauteile der Schutzvorrichtung 1 geschlossen werden kann. Die Mess- und Überwachungsmittel sind mittels wenigstens einer Messleitung 6 mit der zu überwachenden Schutzvorrichtung 1 verbunden.

Die Inbetriebnahme der Überwachungseinrichtung, beispielsweise der Start der Steuer- und Messeinrichtung 5, kann verzögert um eine vorbestimmte Zeitspanne, nach dem Auftreten des Störereignisses erfolgen. Hierdurch wird die Empfindlichkeit der Überwachungseinrichtung gegen EMV-Ereignisse vermindert.

Ebenso kann die Messung oder die Messungen zur Überwachung der Schutzvorrichtung 1, verzögert um eine vorbestimmte Zeitspanne, nach dem Auftreten des Störereignisses, erfolgen. Diese vermindert die EMV-Empfindlichkeit der Überwachungseinrichtung ebenfalls.

Wird von der Steuer- und Messeinrichtung 5 ein vorbestimmter Zustand erkannt, so kann dieser Zustand über einer Signalisierungseinrichtung 7, beispielsweise eine optische Anzeige oder über eine Meldeinrichtung 8, beispielsweise ein bistabiles Relais K mit einem geschalteten Öffner, angezeigt und/oder zur Weiterverarbeitung an weitere, gegebenenfalls übergeordnete elektrische Einrichtungen weitergemeldet werden.

Hierbei ist klar, dass eine Überwachung der Schutzvorrichtung nur im Falle eines aufgetretenen Störereignisses erforderlich ist. Gerade dann aber steht elektrische Energie in Folge des aufgetretenen Störereignisses zur Verfügung, die dann erfindungsgemäß zur Versorgung der Überwachungseinrichtung genutzt wird. Klar ist weiterhin, dass die Elemente der Überwachungseinrichtung hinsichtlich der Speicherkapazität und der Energieaufnahme derart ausgestaltet sind, dass die in Folge des aufgetretenen Störereignisses zur Verfügung stehende elektrische Energiemenge zur Versorgung der Überwachungseinrichtung - unter Sicherstellung der gewünschten Funktionsweise - ausreichend vorhanden ist.

Die Erfindung ist nicht auf die beschriebenen Ausführungsbeispiele beschränkt, die auf vielfache Weise abgewandelt werden können.

Insbesondere ist es denkbar, mehrere Koppeleinrichtungen zusammen zuschalten um die Menge an ausgekoppelter elektrischer Energie zu steigern.

## Patentansprüche

1. Überwachungseinrichtung zur Überwachung von Schutzvorrichtungen, die elektrische Systeme gegen Störereignisse schützen, wobei ein Teil der durch das Strirereignis in die überwachte Schutzvorrichtung eingekoppelten elektrischen Energie zur Versorgung der Überwachungseinrichtung verwendet wird und die Überwachungseinrichtung mindestens eine Koppeleinrichtung (2), eine Gleichricht- und Speichereinrichtung (3), eine Spannungsanpassungseinrichtung (4), eine Steuer- und Messeinrichtung (5), sowie eine Signalisierungseinrichtung (7, 8) aufweist, wobei mittels der Koppeleinrichtung (2) in Folge eines Störereignisses in die Schutzvorrichtung eingekoppelte elektrische Energie ausgekoppelt wird, wobei mittels der nachgeschalteten Gleichricht- und Speichereinrichtung (3) die so gewonnene Spannung gleichgerichtet und gespeichert wird, und wobei mittels nachgeschalteter Spannungsanpassungseinrichtung (4) die Ausgangsspannung der Gleichricht- und Speichereinrichtung (3) auf ein Niveau gebracht wird, das zur Versorgung der Steuer- und Messeinrichtung (5) geeignet ist, **dadurch gekennzeichnet, dass** ein Einschalten der Überwachungseinrichtung, verzögert um eine vorbestimmte Zeitspanne, nach dem Auftreten des Störereignisses erfolgt, und dass die Steuer- und Messeinrichtung (5) Messungen zur Überwachung der Schutzvorrichtung durchführt und zwar verzögert um eine vorbestimmte Zeitspanne, nach dem Auftreten eines Störereignisses.

2. Überwachungseinrichtung nach Anspruch 1, **dadurch gekenntzeichnet, dass** sie wenigstens eine Signalisierungseinrichtung (7) zur Signalisierung wenigstens eines Zustandes der Schutzvorrichtung (1) aufweist.

3. Überwachungseinrichtung nach Anspruch 1 oder 2, **dadurch gekennzeichnet, dass** sie wenigstens eine Meldeeinrichtung (8) zur Weitermeldung wenigstens eines Zustandes der Schutzvorrichtung (1) aufweist.

## Claims

1. Monitoring device for monitoring protective devices, which protect electrical systems against interference events, wherein a part of the electrical energy injected into the monitored protective device by the interference event is used to supply the monitoring device and the monitoring device has at least one coupling device (2), one rectifier and storage device (3), one voltage adaptation device (4), one control and measurement device (5) as well as one signaling device (7, 8), whereby by means of the coupling device (2), any electrical energy that is injected into the protective device as a result of an interference event is decoupled, whereby by means of the series-connected rectifier and storage device (3), the voltage, thus obtained, is rectified and stored, and whereby by means of the series-connected voltage adaptation device (4), the output voltage of the rectifier and storage device (3) is brought to a level that is suitable to supply the control and measurement device (5), **characterized in that** after the occurrence of the interference event, the monitoring unit is turned on with the delay of a predetermined time span, and that the control and measurement device (5) performs measurements for the purpose of monitoring the protective device specifically delayed by a predetermined span of time after the occurrence of an interference event.

2. Monitoring device according to claim 1, **characterized in that** it has at least one signaling device (7) to signal at least one state of the protective device (1).

3. Monitoring device according to claim 1 or 2, **characterized in that** it has at least one reporting device (8) for relaying at least one state of the protective device (1).

## Revendications

1. Dispositif de surveillance pour la surveillance d'installations de protection qui protègent des systèmes électriques contre des incidents, dans laquelle une partie de l'énergie électrique transmise à l'installation de protection surveillée lors de l'incident est utilisée pour alimenter le dispositif de surveillance et le dispositif de surveillance comprend au moins un dispositif de couplage (2), un dispositif redresseur et accumulateur (3), un dispositif adaptateur de tension (4), un dispositif de commande et de mesure (5), ainsi qu'un dispositif de signalisation (7, 8), le dispositif de couplage (2) dérivant l'énergie électrique transmise à l'installation de protection à la suite de l'incident, le dispositif redresseur et accumulateur (3) monté en aval redressant et accumulant la tension ainsi récupérée et le dispositif adaptateur de tension (4) monté en aval amenant la tension du dispositif redresseur et accumulateur (3) à un niveau convenant pour l'alimentation du dispositif de commande et de mesure (5), **caractérisé en ce qu'**une activation du dispositif de surveillance est différée d'un laps de temps prédéterminé après l'incident et **en ce que** le dispositif de commande et de mesure (5) effectue des mesures pour surveiller le dispositif de protection, de façon différée d'un laps de temps prédéterminé, après l'incident.

2. Dispositif de surveillance selon la revendication 1, **caractérisé en ce qu'**il comporte au moins un dispositif de signalisation (7) pour la signalisation d'au moins un état de l'installation de protection (1).

3. Dispositif de surveillance selon la revendication 1 ou 2, **caractérisé en ce qu'**il comporte au moins un dispositif de transmission (8) pour la transmission d'au moins un état de l'installation de protection (1).
